Europäisches Patentamt

**European Patent Office**

**Office européen des brevets**

(11) Veröffentlichungsnummer: **0 485 865 A1**

# (12) EUROPÄISCHE PATENTANMELDUNG

(21) Anmeldenummer: **91118850.6**

(51) Int. Cl.5: **H05B 41/29**, H02M 3/156

(22) Anmeldetag: **05.11.91**

(30) Priorität: **16.11.90 DE 4036604**

(43) Veröffentlichungstag der Anmeldung:
**20.05.92 Patentblatt 92/21**

(84) Benannte Vertragsstaaten:
**DE FR GB IT**

(71) Anmelder: **Patent-Treuhand-Gesellschaft für
elektrische Glühlampen mbH
Hellabrunner Strasse 1
W-8000 München 90(DE)**

(72) Erfinder: **Bernitz, Franz
Ferd.-Lassalle Strasse 1
W-8025 Unterhaching(DE)**
Erfinder: **Huber, Andreas
Riedlstrasse 34
W-8031 Maisach(DE)**
Erfinder: **Hansmann, Frank
Bullerbachstrasse 13
W-3013 Barsinghausen(DE)**

(54) **Schaltungsanordnung zum Betrieb einer Entladungslampe.**

(57) Bei der Schaltungsanordnung zum Betrieb einer Entladungslampe bestehend aus einem Schaltnetzteil mit Steuerschaltung, eventuell einem Wechselrichter und einem Zündgerät ist zwischen die Steuerschaltung (ST) und den Verbindungspunkt (A1) zwischen dem aktiven Halbleiterschalter (T1) und der Induktivität (DR) des Schaltnetzteils ein Spannungs-Sensor in Form eines RC-Glieds (R1, C3) geschaltet. Der Spannungs-Sensor sorgt dafür, daß der aktive Halbleiterschalter (T1) genau zu dem Zeitpunkt eingeschaltet wird, wenn die in der Induktivität (DR) gespeicherte Energie abgeflossen und die Rückwärts-Erholzeit des passiven Halbleiterschalters (D1) abgelaufen ist, so daß das Schaltnetzteil in einem "discontinuous mode" betrieben wird.

FIG. 2

Die Erfindung betrifft eine Schaltungsanordnung zum Betrieb einer Entladungslampe bestehend aus einem Schaltnetzteil, eventuell einem Wechselrichter und einem Zündgerät gemäß dem Oberbegriff des Anspruchs 1.

Hauptbestandteil solcher Schaltungsanordnungen zum Betrieb von Entladungslampen ist das Schaltnetzteil mit der Steuerschaltung, das für die Stromversorgung der Lampe verantwortlich ist. Solche Schaltnetzteile haben in den letzten Jahren aufgrund ihres geringen Volumens und Gewichtes die herkömmlichen elektromagnetischen Netzteile verdrängt. Ein Beispiel für eine solche Stromversorgungseinheit zum Betrieb einer Entladungslampe an einem Wechselstromnetz findet sich in der EP-A-0 059 053. Das Schaltnetzteil weist eine sehr umfangreiche Steuerschaltung zur Regelung des Tastverhältnisses am Schalttransistor auf.

Neuerdings werden Hochdruckentladungslampen auch in Bereichen wie z.B. in Autoscheinwerfern oder bei der Videoprojektion eingesetzt, wo eine konstante Lichtabgabe der Lampe gewünscht wird, die eine Leistungsregelung der Schaltungsanordnung erforderlich macht.

Aufgabe der Erfindung ist es eine Schaltungsanordnung zum Betreiben einer Entladungslampe mit negativem differentiellen Widerstand zu schaffen, wobei eine in definierten Grenzen festgelegte Gleichspannung wie sie z.B. an der Batterie eines Autos vorliegt mittels eines Schaltnetzteils in eine variable Gleichspannung mit großem Arbeitsbereich umgewandelt wird. Die Schaltungsanordnung sollte dabei eine Leistungsregelung der Entladungslampe ermöglichen und einen möglichst kompakten Aufbau zum Einbau in kleine Gehäuse aufweisen.

Die Aufgabe wird durch das kennzeichnende Merkmal des ersten Anspruchs gelöst. Weitere vorteilhafte Merkmale der Schaltungsanordnung sind den Unteransprüchen zu entnehmen.

Mit Hilfe des Spannungs-Sensors, insbesondere in Form einer RC-Reihenschaltung, ist es möglich, den oder die aktiven Halbleiterschalter (Transistoren) des Schaltnetzteils genau zu dem Zeitpunkt einzuschalten, wenn die Rückwärts-Erholzeit des oder der passiven Halbleiterschalter (Dioden) abgelaufen ist, so daß das Schaltnetzteil in einem "discontinuous mode" betrieben wird.

Der diskontinuierliche Betrieb, bei dem der Strom in der Induktivität einen sägezahnähnlichen Verlauf aufweist und die einzelnen Flanken jeweils bis zur O-Linie zurückgehen, beinhaltet, wenn die Rückwärts-Erholzeit der passiven Halbleiterschalter abgewartet wird, geringere Leistungsverluste und kleinere Belastungen für die einzelnen Schaltungselemente als der kontinuierliche Betrieb. Beim kontinuierlichen Betrieb, wie er z.B. bei dem Vorschaltgerät in der EP-A-0 059 053 angewandt wird, besitzt die Stromverlaufskurve in der Induktivität lediglich kleine sägezahnähnliche Verformungen, die nicht auf die O-Linie zurückgehen. Diese Betriebsart erlaubt es nicht mit dem Einschalten der aktiven Halbleiterschalter zu warten, bis die Rückwärts-Erholzeit der passiven Halbleiterschalter abgelaufen ist, so daß höhere Belastungen der Bauteile unumgänglich sind.

Die Steuerung des Schaltnetzteiles gestaltet sich sehr einfach, wenn hierzu mindestens zwei, vorteilhaft drei in Reihe geschaltete Schwellwertschalter verwendet werden, wobei vor dem letzten Schwellwertschalter ein Kondensator geschaltet und dem ersten Schwellwertschalter ein Widerstand parallel gelegt ist. Die Ansteuerung erfolgt durch einen dem Augenblickswert der Ausgangsleistung entsprechenden Steuerstrom, der über einen Steueranschluß vor dem letzten Schwellwertschalter in die Steuerschaltung eingespeist wird.

Als Schwellwertschalter dienen vorteilhalt invertierende Schmitt-Trigger, die in Form einer integrierten Schaltung aufgebaut sind. Dadurch lassen sich die Abmessungen der Schaltungsanordnung weiter reduzieren.

Durch einen zusätzlichen Kondensator parallel zum Ausgang des Schaltnetzteils wird eine weitere Glättung des der Lampe angebotenen Stroms erreicht.

Weitere Merkmale und Vorteile der erfindungsgemäßen Schaltungsanordnung sind den nachfolgenden Ausführungsbeispielen zu entnehmen.

Figur 1     zeigt ein Blockschaltbild der gesamten Schaltungsanordnung zum Betrieb einer Hochdruckentladungslampe

Figur 2     zeigt den Schaltungsaufbau eines erfindungsgemäßen Schaltnetzteils mit Steuerschaltung für die in Figur 1 aufgeführte Schaltungsanordnung.

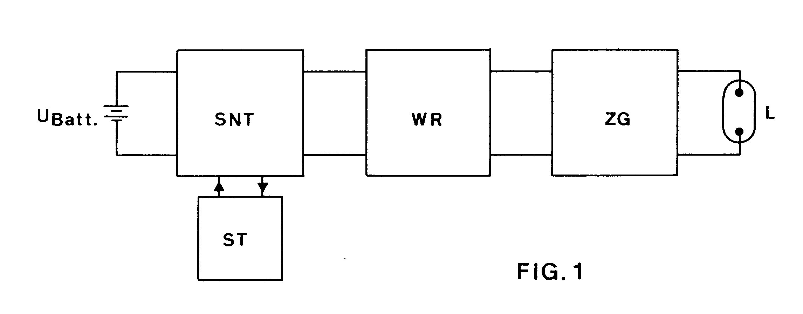

In Figur 1 ist die gesamte Schaltungsanordnung zum Betrieb einer Hochdruckentladungslampe L an einer Batterie aufgeteilt in Schaltungsblöcke dargestellt. Direkt an die Spannungsquelle $U_{Batt.}$ ist ein Schaltnetzteil SNT zur Erzeugung der für die Lampe L erforderlichen Gleichspannung angeschlossen, das von einer Steuerschaltung ST geregelt wird. Anschließend folgt ein Wechselrichter WR zur Erzeugung einer der Gleich spannung entsprechenden Wechselspannung und sodann ein Zündgerät ZG zur Schaffung der nötigen Zündimpulse, damit die Hochdruckentladungslampe L sicher gezündet werden kann. Soll die Hochdruckentladungslampe L mit Gleichstrom betrieben werden, so kann der Wechselrichter WR entfallen.

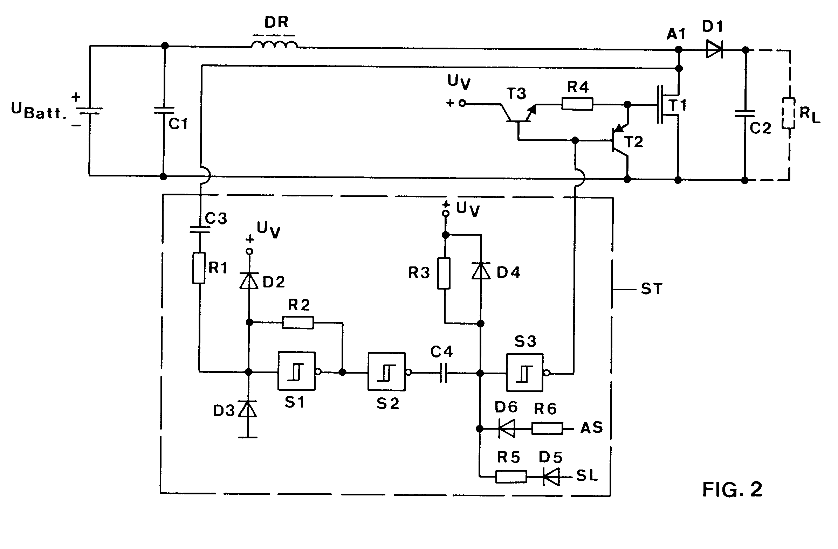

Figur 2 zeigt den genauen Schaltungsaufbau eines erfindungsgemäßen Schaltnetzteils mit Steuerschaltung ST für die in Figur 1 aufgeführte Schaltungsanordnung. Das Schaltnetzteil ist als Hochsetzsteller (boost converter) aufgebaut und besteht aus einem Eingangskondensator C1, einer Drossel DR, einem Schalttransistor T1, einer Diode D1 und einem Ausgangskondensator C2. An den Ausgang sind die weiteren Schaltungsteile mit der Hochdruckentladungslampe angeschlossen, die der einfacheren Darstellung wegen hier als Last mit einem Lastwiderstand $R_L$ dargestellt sind.

An dem Verbindungspunkt A1 zwischen der Drossel DR und der Diode D1 sind über ein RC-Glied, bestehend aus dem Kondensator C3 und dem Widerstand R1, drei in Reihe geschaltete invertierende Schmitt-Trigger S1, S2 und S3 angeschlossen, wobei der Ausgang des letzten Schmitt-Triggers S3 über eine Totem-Pol-Verstärkerschaltung bestehend aus den Transistoren T2 und T3 und dem Widerstand R4 mit der Basis des Schalttransistors T1 verbunden ist. Die Totem-Pol-Verstärkerschaltung sorgt für eine einwandfreie Ansteuerung des Schalttransistors T1.

Der Eingang des ersten Schmitt-Triggers S1 ist über eine Diode D2 in Gleichstromsperrichtung mit dem positiven Pol einer internen Versorgungsgleichspannung $U_V$ und über eine Diode D3 in Gleichstromdurchlaßrichtung mit Masse verbunden. Dadurch wird der Schmitt-Trigger S1 gegen Überspannungen gesichert. Der Schmitt-Trigger S1 ist außerdem durch einen Widerstand R2 überbrückt, um einen Anlauf der Steuerschaltung ST beim Einschalten der Schaltungsanordnung zu ermöglichen. Die Startfrequenz, die durch die Eingangskapazität C $^3$und den Rückkopplungswiderstand R2 festgelegt wird, ist deutlich tiefer als die Betriebsfrequenz des Schaltnetzteils.

Zwischen den zweiten Schmitt-Trigger S2 und den dritten Schmitt-Trigger S3 ist ein Kondensator C4 geschaltet. Außerdem ist der Eingang des dritten Schmitt-Triggers S3 über eine Parallelschaltung aus einem Widerstand R3 und einer Diode D4 mit dem positiven Pol einer internen Versorgungsgleichspannung $U_V$ verbunden. Am Eingang des dritten Schmitt-Triggers S3 ist über einen Widerstand R5 und eine Diode D5 eine externe Steuerung SL angesetzt, über die die Pulsweite des Transistors T1 so gesteuert wird, daß die Lampe mit einer konstanten Leistung betrieben wird. Hier kann auch eine externe Abschaltung AS über eine Diode D6 und einen Widerstand R6 angesetzt sein.

Zur Funktionsweise des Schaltnetzteils mit der Steuerschaltung:
Bei leitendem Schalttransistor T1 steigt der Strom linear in der Drossel DR solange an, bis der Transistor T1 gesperrt wird. Während der Leitphase des Transistors T1 fließt kein Strom über die Diode D1 in den Kondensator C2. Wird der Transistor T1 gesperrt, so wird in der Drossel DR eine Spannung induziert, die sich zur Batteriespannung $U_{Batt.}$ addiert. Es fließt weiterhin ein Strom in der gleichen Richtung durch die Drossel DR und lädt den Kondensator C2 auf, bis die Drossel DR entmagnetisiert ist.

Für den Übergang der Diode D1 vom Leitzustand in den Sperrzustand benötigt diese eine gewisse Erholzeit. Während dieser Erholzeit, die je nach Güte im 100 ns-Bereich liegt, ist die Diode D1 auch in Sperrichtung leitend. Das bedeutet, daß nachdem der Strom durch die Drossel DR auf 0 abgefallen ist, kurzzeitig während dieser Erholzeit Strom aus dem Ausgangskondensator C2 durch die Diode D1 in Richtung Transistor T1 fließen kann. Würde nun der Transistor T1, nachdem der in Vorwärtsrichtung fließende Strom durch die Drossel auf 0 abgefallen ist, sofort wieder eingeschaltet, so könnte ein hoher Kurzschlußstrom aus dem Kondensator C2 über die Diode D1 und den Transistor T1 auftreten und die Halbleiter stressen. Der Transistor darf daher vorteilhaft erst wieder eingeschaltet werden, wenn die Rückwärts-Erholzeit der Diode D1 abgelaufen ist.

Mit Hilfe des RC-Gliedes, das an dem Verbindungspunkt A1 zwischen der Drossel DR und der Diode D1 angeschlossen ist, wird nun dieser Zeitpunkt festgelegt.

Sobald die Diode D1 in Rückwärtsrichtung wieder sperrt, springt die Spannung am Verbindungspunkt A1 gegen kleine Werte. Dieser Spannungssprung wird durch das Zeitglied aus dem Kondensator C3 und dem Widerstand R1 an den Eingang des ersten invertierenden Schmitt-Triggers S1 gegeben, der damit auf logisch 0 geschaltet wird. Der Ausgang des ersten invertierenden Schmitt-Trigger S1 nimmt daraufhin logisch 1 an und steuert den Eingang des zweiten Schmitt-Triggers S2 auf logisch 1, so daß dessen Ausgang auf logisch 0 wechselt. Dieser Wechsel wird über den Kondensator C4 an den Eingang des dritten Schmitt-Trigger S3 übertragen, dessen Eingang nun ebenfalls auf logisch 0 liegt. Damit wird der Ausgang des dritten Schmitt-Triggers S3 auf logisch 1 geschaltet, wodurch der Transistor T1 wieder in den leitenden Zustand versetzt wird.

Die Einschaltdauer des Schalttransistors T1 und damit die Aufladezeit der Drossel DR wird bestimmt durch die Aufladezeit des Kondensators C4 auf die obere Hysterese-Schwellspannung des dritten invertierenden Schmitt-Triggers S3. Diese Aufladezeit kann nun durch ein entsprechendes Steuersignal, das über die Diode D5 und den Widerstand R4 der externen Steuerung SL auf den Eingang des dritten Schmitt-Triggers S3 gegeben wird, verkürzt werden. Somit läßt sich eine entsprechende Leistungssteuerung der Hochdruckentladungslampe realisieren. Auf die gleiche Weise kann über den Widerstand R6 und die Diode D6 der externen Abschaltung AS auch ein Signal zur Abschaltung der Hochdruckentladungslampe eingespeist werden.

Durch die interne Versorgungsgleichspannung $U_V$, die über den Widerstand R3 an den Eingang des dritten Schmitt-Triggers S3 gelegt ist, wird sichergestellt, daß das Schaltnetzteil mit der Ansteuerung ST ohne äußeres Steuersignal über SL zumindest oberhalb der Hörgrenze arbeitet.

**Patentansprüche**

1. Schaltungsanordnung zum Betrieb einer Entladungslampe (L) bestehend aus einem Schaltnetzteil (SNT) zum Umwandeln einer in definierten Grenzen festgelegten Gleichspannung in eine variable Gleichspannung mit großem Arbeitsbereich, eventuell aus einem Wechselrichter (WR) zum Erzeugen einer Wechselspannung und aus einem nachgeschalteten Zündgerät (ZG), wobei das Schaltnetzteil (SNT) einen oder mehrere aktive (T1) und passive (D1) Halbleiterschalter, eine Induktivität (DR), einen Kondensator (C1) im Eingang und eine Steuerschaltung (ST), die den oder die aktiven Halbleiterschalter (T1) taktet, beinhaltet, dadurch gekennzeichnet, daß zwischen die Steuerschaltung (ST) und den Verbindungspunkt (A1) zwischen dem oder den aktiven Halbleiterschaltern (T1) und der Induktivität (DR) des Schaltnetzteils (SNT) ein Spannungs-Sensor geschaltet ist, der dafür sorgt, daß der oder die aktiven Halbleiterschalter (T1) genau zu dem Zeitpunkt eingeschaltet werden, wenn die in der Induktivität (DR) gespeicherte Energie abgeflossen und die Rückwärts-Erholzeit des oder der passiven Halbleiterschalter (D1) abgelaufen ist, so daß das Schaltnetzteil (SNT) in einem "discontinuous mode" betrieben wird.

2. Schaltungsanordnung nach Anspruch 1, dadurch gekennzeichnet, daß der Spannungs-Sensor aus einer Reihenschaltung eines Widerstandes (R1) und einer Kapazität (C3) besteht.

3. Schaltungsanordnung nach Anspruch 1, dadurch gekennzeichnet, daß die Steuerschaltung (ST) aus mindestens zwei in Reihe liegenden Schwellwertschaltern besteht, wobei vor dem letzten Schwellwertschalter (S3) ein Kondensator (C4) geschaltet ist, dem ersten Schwellwertschalter (S1) ein Widerstand (R2) parallel gelegt ist und zwischen dem Kondensator (C4) und dem letzten Schwellwertschalter (S3) ein Steueranschluß (SL) vorgesehen ist, über den ein durch den Augenblickswert der Ausgangsleistung festgelegter Steuerstrom in die Steuerschaltung eingespeist wird.

4. Schaltungsanordnung nach Anspruch 3, dadurch gekennzeichnet, daß die Steuerschaltung (ST) drei in Reihe liegende Schwellwertschalter (S1, S2, S3) aufweist.

5. Schaltungsanordnung nach Anspruch 3, dadurch gekennzeichnet, daß die Schwellwertschalter (S1, S2, S3) invertierende Schmitt-Trigger sind.

6. Schaltungsanordnung nach einem oder mehreren der vorhergehenden Ansprüche, dadurch gekennzeichnet, daß die Schwellwertschalter (S1, S2, S3) in Form einer integrierten Schaltung aufgebaut sind.

7. Schaltungsanordnung nach Anspruch 1, dadurch gekennzeichnet, daß parallel zum Ausgang des Schaltnetzteils (SNT) ein Kondensator (C2) geschaltet ist.

8. Schaltungsanordnung nach Anspruch 3, dadurch gekennzeichnet, daß der Eingang des ersten Schwellwertschalters (S1) über eine Diode (D2) in Gleichstromsperrichtung mit dem positiven Pol einer internen Versorgungsgleichspannung ($U_V$) und über eine Diode (D3) in Gleichstromdurchlaßrichtung mit der Masse verbunden ist.

9. Schaltungsanordnung nach Anspruch 3, dadurch gekennzeichnet, daß der Eingang des letzten Schwellwertschalters (S3) über eine Parallelschaltung eines Widerstandes (R3) und einer Diode (D4) mit dem positiven Pol einer internen Versorgungsgleichspannung ($U_V$) verbunden ist.

FIG.1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 256 231 (PATENT TREUHAND) * Spalte 2, Zeilen 32-48; Spalte 5, Zeile 47 - Spalte 6, Zeile 34; Figuren 1-3 *  ----- | 1-9 | H 05 B 41/29 H 02 M 3/156 |

**RECHERCHIERTE SACHGEBIETE (Int. Cl.5)**

H 05 B
H 02 M

Der vorliegende Recherchenbericht wurde für alle Patentansprüche erstellt

| Recherchenort | Abschlußdatum der Recherche | Prüfer |
|---|---|---|
| DEN HAAG | 23-01-1992 | SPEISER P. |

EPO FORM 1503 03.82 (P0403)